(19) Europäisches Patentamt
European Patent Office
Office européen des brevets

(11) Veröffentlichungsnummer: **0 436 895 B1**

# (12) EUROPÄISCHE PATENTSCHRIFT

(45) Veröffentlichungstag der Patentschrift: **18.01.95**

(51) Int. Cl.6: **C08L 69/00**, C08L 51/04, C08L 37/00, //(C08L69/00,51:04, 37:00)

(21) Anmeldenummer: **90124862.5**

(22) Anmeldetag: **20.12.90**

## (54) Formmassen mit Oxetanylgruppen.

(30) Priorität: **06.01.90 DE 4000233**

(43) Veröffentlichungstag der Anmeldung:
**17.07.91 Patentblatt 91/29**

(45) Bekanntmachung des Hinweises auf die Patenterteilung:
**18.01.95 Patentblatt 95/03**

(84) Benannte Vertragsstaaten:
**DE FR GB IT**

(56) Entgegenhaltungen:
**EP-A- 0 158 931**
**EP-A- 0 378 862**
**EP-A- 0 378 863**
**FR-A- 2 337 175**
**US-A- 3 284 545**

**CHEMICAL ABSTRACTS, vol. 81, no. 24, 1974, Seite 57, Zusammenfassung Nr.153514t, Columbus, Ohio, US; JP-A-73 44 676**

(73) Patentinhaber: **BAYER AG**

**D-51368 Leverkusen (DE)**

(72) Erfinder: **Lütjens, Holger, Dr.**
**Rybniker Strasse 12**
**W-5000 Köln 80 (DE)**
Erfinder: **Wittmann, Dieter, Dr.**
**Wolfskaul 4**
**W-5000 Köln 80 (DE)**
Erfinder: **Piejko, Karl-Erwin, Dr.**
**Unterscheider Weg 7a**
**W-5060 Bergisch Gladbach 2 (DE)**
Erfinder: **Lindner, Christian, Dr.**
**Im Wasserblech 11**
**W-5000 Köln 80 (DE)**
Erfinder: **Fengler, Gerd, Dr.**
**Deutschordensweg 12**
**W-4150 Krefeld-Traar (DE)**

**EP 0 436 895 B1**

Anmerkung: Innerhalb von neun Monaten nach der Bekanntmachung des Hinweises auf die Erteilung des europäischen Patents kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist (Art. 99(1) Europäisches Patentübereinkommen).

## Beschreibung

Die Erfindung betrifft Formmassen aus thermoplastischen aromatischen Polycarbonaten und Oxetanylgruppen enthaltenden Polymerisaten.

Formmassen aus Polycarbonaten (PC) und Pfropfpolymerisaten harzbildender Monomerer auf einen Kautschuk (ABS) sind seit langem bekannt (vgl. DE-PS 1 170 141 und DE-AS 1 810 993). Die Verbesserung der Fließnahtfestigkeit und Tieftemperaturzähigkeit von PC/ABS-Formmassen durch Einpolymerisieren spezieller Acrylate in die ABS-Polymerisate ist Gegenstand der US-PS 4 804 708.

US-PS 4 624 986 lehrt, daß Mischungen aus Polycarbonaten und ABS-Polymerisaten, die durch Masse- oder hergestellt wurden, Formkörper Massesuspensionspolymerisation mit matter Oberfläche und guten Tieftemperatureigenschaften ergeben.

Gegenstand der vorliegenden Erfindung sind PC/ABS-Formmassen, die gleichzeitig günstige Fließnahtfestigkeit und Tieftemperaturzähigkeit haben und Formkörper mit matter Oberfläche liefern.

Insbesondere sind Gegenstand der Erfindung Polymermischungen aus

A) 5 bis 98 Gew.-Teilen, bevorzugt 20 bis 95 Gew.-Teilen eines aromatischen Polycarbonats,

B) 2 bis 70 Gew.-Teilen, bevorzugt 5 bis 60 Gew.-Teilen eines Pfropfpolymerisats harzbildender Monomerer auf einen teilchenförmigen Dien- und/oder Acrylatkautschuk mit mittlerem Teilchendurchmesser ($d_{50}$) von 80 bis 800 nm, bevorzugt 100 bis 600 nm,

C) 0 bis 80 Gew.-Teilen, bevorzugt 0,5 bis 40 Gew.-Teilen eines unvernetzten thermoplastischen Vinylcopolymerisats mit einer Erweichungstemperatur über 30 °C,

in denen entweder die harzbildenden Monomeren in B) oder ein Monomer des thermoplastischen Vinylcopolymerisats C) oder beide eine solche Menge eines Monomeren der Formel (I)

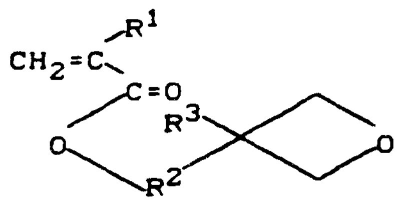

(I)

mit $R^1$ = H, $CH_3$; $R^2$ = $C_1$-$C_8$-Alkylen; $R^3$ = $C_1$-$C_4$-Alkylen enthalten haben, daß die daraus hervorgegangenen Oxetanylgruppen enthaltenden Strukturelemente 0,05 bis 5 Gew.-%, vorzugsweise 0,1 - 3 Gew.-%, der Polymermischungen ausmachen.

Bevorzugt befinden sich die Oxetanylgruppen enthaltenden Strukturelemente nur in dem thermoplastischen Vinylcopolymerisat C).

A. Polycarbonate

Die den Bestandteil A der erfindungsgemäßen Mischungen darstellenden Polycarbonate A) sind solche auf Basis von Diphenolen der Formel (II),

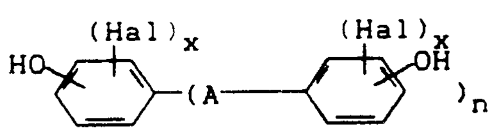

(II)

worin A eine Einfachbindung, $C_1$-$C_5$-Alkylen, $C_2$-$C_5$-Alkyliden, $C_5$-$C_6$-Cycloalkyliden, -S- oder -$SO_2$; Hal Chlor oder Brom, x 0, 1 oder 2 und n 1 oder 0 bedeuten und gegebenenfalls der Formel (IIa),

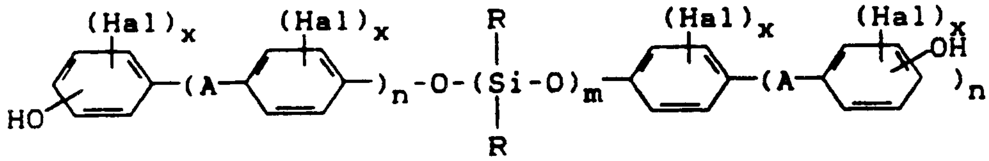

(IIa)

worin A, Hal, x und n die für Formel (II) genannte Bedeutung haben, und R gleiche oder verschiedene lineare $C_1$-$C_{20}$-Alkyl-, verzweigte $C_3$-$C_{20}$-Alkyl-, $C_6$-$C_{20}$-Aryl-Reste, vorzugsweise $CH_3$, bedeutet und m eine ganze Zahl von 5 bis 100, vorzugsweise von 20 bis 80, ist.

Polycarbonate A) sind Homopolycarbonat und Copolycarbonate. Die Diphenole der Formel (IIa) werden nur für die Herstellung von Copolycarbonaten zusammen mit den Diphenolen der Formel (II) eingesetzt, und zwar in Mengen von 1 bis 20 Gew.-%, vorzugsweise 1,5 bis 15 Gew.-% und insbesondere 2 bis 10 Gew.-%, bezogen auf die gesamten Diphenole.

Polycarbonat A) kann auch aus Mischungen von thermoplastischen Polycarbonaten bestehen wobei die Menge der Diphenole (IIa), (falls vorhanden) bezogen auf die gesamten Diphenole in der Polycarbonatmischung, 1 bis 20 Gew.-% ist.

Die Herstellung der Polycarbonate A) ist bekannt z.B. durch Phasengrenzflächenpolykondensation mit Phosgen oder mit Phosgen in homogener Phase ("Pyridinverfahren"), wobei das Molekulargewicht in bekannter Weise durch eine entsprechende Menge an bekannten Kettenabbrechern eingestellt wird.

Geeignete Kettenabbrecher sind beispielsweise Phenol, p-Chlorphenol, p-tert.-Butylphenol oder 2,4,6-Tribromphenol, aber auch langkettige Alkylphenole, wie 4-(1,3-Tetramethylbutyl)-phenol gemäß DE-OS 2 842 005 oder Monoalkylphenol bzw. Dialkylphenole mit insgesamt 8 bis 20 C-Atomen in den Alkylsubstituenten gemäß DE-OS 3 506 472 wie 3,5-di-tert.-Butylphenol, p-iso-Octylphenol, p-tert.-Octylphenol, p-Dodecylphenol und 2-(3,5-Dimethylheptyl)-phenol und 4-(3,5-Dimethyl-heptyl)-phenol. Die erforderliche Menge Kettenabbrecher ist im allgemeinen 0,5 Mol-% bis 10 Mol-%, bezogen auf die gesamten Diphenole der Formel (II) und gegebenenfalls (IIa).

Die Polycarbonate haben mittlere Molekulargewichte $\overline{M}w$, (Gewichtsmittel, gemessen beispielsweise durch Ultrazentrifugation oder Streulichtmessung) von 10 000 bis 200 000 g/Mol, vorzugsweise von 20 000 bis 80 000 g/Mol.

Geeignete Diphenole der Formel (II) sind beispielsweise Hydrochinon, Resorcin, 4,4-Dihydroxydiphenyl, 2,2-Bis-(4-hydroxyphenyl)-propan, 2,4-Bis-(4-hydroxyphenyl)-2-methylbutan, 1,1-Bis-(4-hydroxyphenyl)-cyclohexan, 2,2-Bis-(3-chlor-4-hydroxyphenyl)-propan, 2,2-Bis-(3,5-dichlor-4-hydroxyphenyl)-propan, 2,2-Bis-(3,5-dibrom-4-hydroxyphenyl)-propan.

Bevorzugte Diphenole der Formel (II) sind 2,2-Bis-(4-hydroxyphenyl)-propan, 2,2-Bis-(3,5-dichlor-4-hydroxyphenyl)-propan und 1,1-Bis-(4-hydroxyphenyl)-cyclohexan.

Beispiele für Diphenole der Formel (IIa) sind solche, in denen R Methyl, Ethyl, Propyl, n-Butyl, tert.-Butyl oder Phenyl ist.

Bevorzugte Diphenole der Formel (IIa) entsprechen der Formel (IIb)

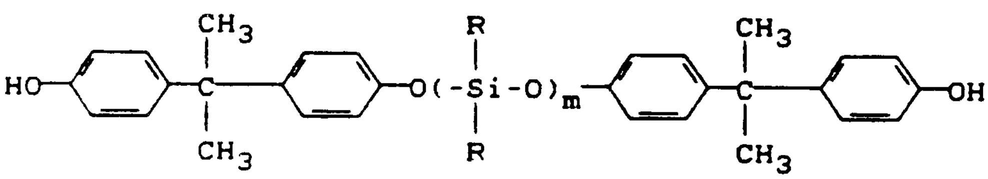

(IIb)

worin die Reste R gleich sind und die obengenannte Bedeutung haben, bevorzugt aber Methyl- oder Phenylgruppen bedeuten und m eine ganze Zahl von 5 bis 100, vorzugsweise von 20 bis 80, ist.

Die Diphenole der Formel (IIa) können beispielsweise aus den Bis-chlorverbindungen der Formel (III)

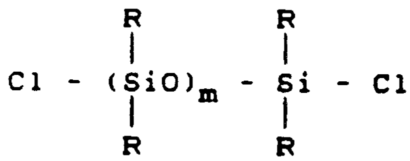

(III)

und den Diphenolen der Formel (II) gemäß US-PS 3 419 634, Spalte 3, in Kombination mit US-PS 3 189 662 hergestellt werden.

In den Bis-chlorverbindungen der Formel (III) haben R und m die gleiche Bedeutung wie in den Diphenolen (IIa) und (IIb).

Die Polycarbonate A) können in bekannter Weise verzweigt sein, vorzugsweise durch den Einbau von 0,05 bis 2,0 Mol-%, bezogen auf die Summe der eingesetzten Diphenole, an drei- oder mehr als dreifunktionellen Verbindungen, beispielsweise solchen mit drei oder mehr als drei phenolischen Gruppen.

Bevorzugte Polycarbonate A) sind neben dem Bisphenol A-Homopolycarbonat die Copolycarbonate von Bisphenol A mit bis zu 15 Mol-% (bezogen auf gesamte Menge an Diphenolen) 2,2-Bis-(3,5-dibrom-4-hydroxyphenyl)-propan und die Copolycarbonate der Diphenole der Formel (II) mit 1 bis 20 Gew.-% Diphenolen der Formel (IIa), vorzugsweise der Formel (IIb), bezogen jeweils auf gesamte Diphenole (II) und (IIa) oder (IIb).

Pfropfpolymerisate B) sind in der thermoplastischen Formmasse bevorzugt in Mengen von 2 bis 70 Gew.-Teilen, insbesondere 5 bis 60 Gew.-Teilen enthalten.

Ihre Pfropfhüllen B.1 bestehen aus Polymerisaten von

B1.1 Styrolen, $\alpha$-Methylstyrolen, Acrylnitril, $C_1$-$C_4$-Vinylcarbonsäuren, $C_1$-$C_8$-Alkylacrylaten und/oder -Alkylmethacrylaten, Maleinsäurederivaten, Vinyl(iden)chlorid und Mischungen daraus und gegebenenfalls

B1.2 Monomeren der Formel (I)

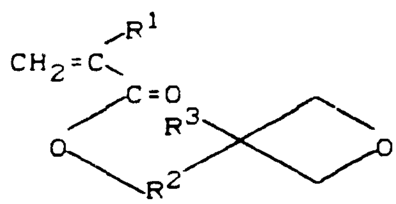

(I)

mit

$R^1$ = H, $CH_3$,

$R^2$ = $C_1$-$C_8$-Alkylen,

$R^3$ = $C_1$-$C_4$-Alkyl,

wobei die Pfropfhülle B.1 aus Copolymerisaten von B1.1 und B1.2 bestehen muß, wenn C) keine Monomeren der Formel (I) einpolymerisiert enthält und ihre

B2. Pfropfgrundlagen aus teilchenförmigen Dien- und/oder Acrylatkautschuken mit mittlerem Teilchendurchmesser ($d_{50}$) von 80 bis 800 nm, bevorzugt von 100 bis 600 nm.

Die Pfropfpolymerisate B) sind bevorzugt teilvernetzt und besitzen Gelgehalte >35 Gew.-%, insbesondere von 60 bis 95 Gew.-%. Sie enthalten bevorzugt 10 bis 95 Gew.-%, insbesondere 20 bis 90 Gew.-% Kautschuk B.2.

(Zur Messung der Teilchendurchmesser siehe W. Scholtan und H. Lange; Kolloid-Zeitschrift und Zeitschrift für Polymere, 250 (1972), S. 787-796. Die Gelgehalte werden nach M. Hoffmann et. al., Polymeranalytik I und II, Georg Thieme Verlag, Stuttgart (1977) bestimmt).

Bevorzugte Pfropfhüllen werden aus

99 - 50 Gew.-% Styrol, $\alpha$-Methylstyrol, p-Methylstyrol, Acrylnitril, Methyl, n-Butyl, Cyclohexylmethacrylat, n-Butylacrylat, Vinylacetat und gegebenenfalls

45 bis 1, bevorzugt 30 bis 2 Gew.-% Monomeren der Formel (I) mit

$R_1$ = H, $-CH_3$,

$R_2$ = $-CH_2-$,

$R_3$ = $-CH_3$; $-C_2H_5$

hergestellt.

Die Monomeren der Formel (I) sind bekannt.

Die Pfropfgrundlage B.2 ist vorzugsweise ein durch radikalische Emulsionspolymerisation hergestellter, meist teilvernetzter Dien- oder Alkylacrylatkautschuk mit mittleren Teilchendurchmessern ($d_{50}$) von 80 bis 800 nm, bevorzugt 100 bis 600 nm.

Dienkautschuke sind z.B. Polybutadien, Polyisopren und Copolymerisate von Butadien mit bis zu 35 Gew.-% Comonomeren wie Styrol, Acrylnitril, Methylmethacrylat, $C_1$-$C_6$-Alkylacrylat. Acrylatkautschuke sind z.B. vernetzte teilchenförmige Emulsionspolymerisate von $C_1$-$C_6$-Alkylacrylaten, insbesondere $C_2$-$C_6$-Alkylacrylaten, gegebenenfalls in Mischung mit bis zu 15 Gew.-% Comonomeren wie Styrol, Methylmethacrylat, Butadien, Vinylmethylether, Acrylnitrile und wenigstens einem polyfunktionellen vernetzten Comonomer, z.B. Divinylbenzol, Glykol-bis-acrylate, Bisacrylamide, Phosphorsäuretriallylester, Allylester der (Meth)-acrylsäure, Triallyl-(iso)-cyanurat, wobei die Acrylatkautschuke bis zu 4 Gew.-% der vernetzenden Comonomere enthalten können.

Geeignet sind auch die in der DE-OS 3 200 070 beschriebenen mehrphasigen Acrylat-Kautschuke, die aus einem stark vernetzten Kern aus Dienkautschuk und einer Hülle aus vernetztem Acrylatkautschuk bestehen (Kautschuk mit Kern-Mantel-Struktur). Die mehrphasigen Acrylatkautschuke enthalten insbesondere 0,5 bis 10, vorzugsweise 2 bis 4 Gew.-% Dienkautschuk (als Kern).

Die Kautschuke B.2 besitzen Gelgehalte (als Maß für die Vernetzung) von größer 35 Gew.-%, vorzugsweise von 60 bis 95 Gew.-%.

Die Pfropfpolymerisate B) können nach bekannten Verfahren durch wäßrige Emulsionspolymerisation mit radikalbildenden Initiatoren bei Temperaturen von 50 bis 90 °C hergestellt werden. Geeignete Initiatoren sind beispielsweise Persulfat, Perphosphat, Hydroperoxide oder Azoverbindungen.

Bevorzugt sind anorganische, wasserlösliche Initiatoren. Bei der Pfropfpolymerisation werden vorteilhaft anionische Emulgatoren auf Carbonsäurebasis, z.B. Salze der Ölsäure, Stearinsäure, Harzsäuren, Abietinsäure sowie deren disproportionierte Derivate mitverwendet.

Die Polymerisation muß so durchgeführt werden, daß die Oxetanylgruppen erhalten bleiben, beispielsweise muß man stark saures (pH <1) und stark alkalisches (pH >12) Milieu und höhere Temperaturen vermeiden. Oxetanylgruppen enthaltende Copolymerisate, die in schwach alkalischem Milieu in wäßriger Dispersion erzeugt worden sind, sind besonders geeignet.

Thermoplastische Vinylcopolymerisate C)

Die Polymerisatmischungen der Erfindung enthalten thermoplastische Vinylcopolymerisate C) in Mengen von 0 bis 80 Gew.-Teilen, vorzugsweise 0,5 bis 40 Gew.-Teilen. Es handelt sich um Polymerisate, die unvernetzt sind, Erweichungstemperaturen über 30 °C, insbesondere über 50 °C haben und die thermoplastisch verarbeitbar sind.

Geeignete thermoplastische Vinylcopolymerisate C) bestehen aus polymerisierten

C1) Vinylmonomeren, vorzugsweise Styrol, α-Methylstyrol, Acrylnitril, Methacrylnitril, Carbonsäure-$C_1$-$C_4$-vinylestern, Acrylsäureestern, Methacrylsäureestern, Maleinsäurederivaten, Vinylchlorid, Vinylidenchlorid und gegebenenfalls

C2) Oxetanylgruppen enthaltenden Monomeren der Formel (I), wobei die Vinylcopolymerisate C) ein solches Monomer einpolymerisiert enthalten müssen, wenn die Pfropfhüllen B1) der Pfropfpolymerisate B) ausschließlich aus Copolymerisaten von B1.1 bestehen.

Bevorzugte Monomere C1) sind Styrol, p-Methylstyrol, α-Methylstyrol, Acrylnitril, Methylmethacrylat, n-Butylmethacrylat, Cyclohexylmethacrylat, n-Butylacrylat, Vinylacetat, Maleinsäureanhydrid, Maleinsäureimid, besonders bevorzugt sind Styrol, α-Methylstyrol, Acrylnitril und Methylmethacrylat.

Besonders bevorzugte Monomere der Formel (I) sind solche, in denen

$R^1$ = H, $CH_3$,

$R^2$ = $-CH_2-$,

$R^3$ = $CH_3$, $C_2H_5$

ist.

Bevorzugt werden mehrere thermoplastische Vinylcopolymerisate C) nebeneinander eingesetzt, wobei wenigstens in eines ein oxetangruppenhaltiges Monomer der Formel (I) eingebaut ist.

Beispiele für thermoplastische Vinylcopolymerisate C) sind solche aus Styrol und Monomeren der Formel (I), aus Methylmethacrylat und (I), ferner Terpolymerisate aus Styrol, Acrylnitril und (I), aus Styrol, Methylmethacrylat und (I), aus α-Methylstyrol, Acrylnitril und (I) sowie Quaterpolymerisate aus α-Methylstyrol, Methylmethacrylat, Acrylnitril und (I).

Die Vinylcopolymerisate C) können Monomere der Formel (I) in Mengen bis zu 50 Gew.-%, bevorzugt bis zu 40 Gew.-% einpolymerisiert enthalten (jeweils bezogen auf C).

Die Vinylcopolymerisate C) können in bekannter Weise bevorzugt in organischen Lösungsmitteln oder in wäßriger Suspension oder Emulsion durch radikalische oder thermische Polymerisation aus den Monomeren hergestellt werden (vgl. DE-AS 2 724 360). Die Polymerisation muß so geführt werden, daß die Oxetanylgruppen (wenigstens zum Teil) erhalten bleiben (beispielsweise muß man bei der Emulsionspolymerisation stark saures (pH <1) und stark Alkalisches (pH >12) Milieu in Kombination mit höheren Temperaturen vermeiden). Oxetanylgruppen enthaltende thermoplastische Harze, die in schwach alkalischem Milieu in wäßriger Dispersion erzeugt worden sind, sind besonders geeignet.

Die Molekulargewichte $\overline{M}w$ (Gewichtsmittel) der Vinylcopolymerisate C) sind bevorzugt 3000 bis 800 000 g/Mol, besonders bevorzugt 10 000 bis 500 000 g/Mol (ermittelt durch Lichtstreuung oder Sedimentation).

Die erfindungsgemäßen Polymerisatmischungen enthalten neben A), B) und gegebenenfalls C) gegebenenfalls wirksame Mengen an üblichen Stabilisatoren, Pigmenten, Fließmitteln, Entformungsmitteln, Flammschutzmitteln und/oder Antistatika. Sie werden hergestellt, indem man die jeweiligen Bestandteile in bekannter Weise vermischt und bei Temperaturen von 200 °C bis 330 °C in üblichen Aggregaten, wie Innenknetern, Extrudern oder Doppelwellenschnecken, schmelzcompoundiert oder schmelzextrudiert.

Die Bestandteile können in bekannter Weise sukzessive oder simultan vermischt werden.

Die Polymermischungen der Erfindung können als thermoplastische Formmassen z.B. zur Herstellung von Formkörpern jeder Art verwendet werden. Insbesondere können Formkörper durch Spritzguß hergestellt werden. Beispiele für herstellbare Formkörper sind Gehäuseteile jeder Art beispielsweise für Haushaltsgeräte, wie Saftpressen, Kaffeemaschinen und Mixer, Abdeckplatten und andere Teile für Bauten und Teile für Kraftfahrzeuge.

## Beispiele

### 1. Ausgangsstoffe

Polycarbonat A:

Lineares Polycarbonat auf Basis Bisphenol A mit einer relativen Lösungsviskosität $\eta$rel von 1,26 bis 1,28, gemessen in $CH_2Cl_2$ bei 25 °C und einer Konzentration von 0,5 g/100 ml.

Pfropfpolymerisat B I:

Pfropfpolymerisat aus 55 Gew.-% Polybutadien mit einem mittleren Teilchendurchmesser ($d_{50}$) von 380 nm als Pfropfgrundlage und 45 Gew.-% einer pfropfpolymerisierten Mischung aus Styrol und Acrylnitril (Gewichtsverhältnis 72/28) als Pfropfauflage (hergestellt durch Emulsionspolymerisation).

Pfropfpolymerisat B II:

Pfropfpolymerisat aus 55 Gew.-% Polybutadien mit einem mittleren Teilchendurchmesser ($d_{50}$) von 380 nm als Pfropfgrundlage und 45 Gew.-% einer pfropfpolymerisierten Mischung von Styrol, Acrylnitril und der Verbindung (Ia)

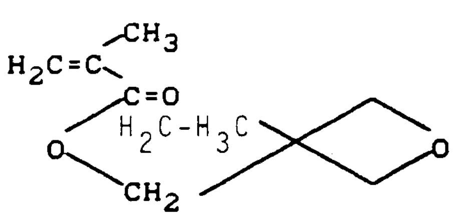

(Ia)

im Gewichtsverhältnis 62:28:10 als Pfropfauflage (hergestellt durch Emulsionspolymerisation).

Vinylcopolymerisat C:

Die Molmassen der Polymerisate werden charakterisiert durch den L-Wert:

L-Wert = ($\eta$rel-1)/0,005;

mit $\eta$rel = relative Lösungsviskosität, gemessen in Dimethylformamid bei 25 °C und einer Konzentration von 0,005 g/$cm^3$.

Vinylcopolymerisat C I:

Copolymerisat aus Styrol und Acrylnitril im Gewichtsvernältnis 72:28, L-Wert: 60.

Vinylcopolymerisat C II:

Oxetanylgruppen enthaltendes Terpolymerisat, hergestellt durch wäßrige Emulsionspolymerisation einer Mischung aus Styrol, Acrylnitril und der Verbindung der Formel (Ia) (siehe Pfropfpolymerisat B II) im Gewichtsverhältnis 60:10:30, mit dem Natriumsalz der disproportionierten Abietinsäure als Emulgator bei pH 10. Das Polymerisat wurde durch Koagulation des Polymerisatlatex mit einer wäßrigen Magnesiumsulfat-Natriumacetat-Essigsäurelösung (pH 4,2) und übliche Aufarbeitung isoliert. Das Polymerisat besitzt einen L-Wert von 59.

2. Herstellung und Prüfung von Formmassen

A, B und C werden auf einem 3 l-Innenkneter bei Temperaturen von 200 bis 220 °C gemischt. Die Formkörper wurden - wenn nicht anders angegeben - bei 260 °C durch Spritzgießen erhalten.

Die Kerbschlagzähigkeit bei 20 °C und bei tiefen Temperaturen wurde an Stäben der Abmessung 80 x 10 x 4 mm nach Methode Izod gemäß ISO 180 1A bestimmt.

Zur Ermittlung der Fließnahtfestigkeit wurde die Schlagzähigkeit an der Bindenaht beidseitig (angespritzter Prüfkörper der Abmessung 170 x 10 x 4 mm (Charpy-Methode nach DIN 53 453) herangezogen.

Der Oberflächenglanz wurde visuell an bei 290 °C durch Spritzgießen hergestellten Musterplättchen der Abmessung 60 x 40 x 2 mm beurteilt.

Die Tabellen 1 und 2 zeigen, daß mit oxetangruppenhaltigen Polymerisaten Formmassen erhalten werden, die gleichzeitig verbesserte Fließnahtfestigkeit und Tieftemperaturzähigkeit sowie eine matte Oberfläche aufweisen.

**Tabelle 1** Zusammensetzung und Eigenschaften der Formmassen

| Beispiel | Bestandteile: Polycarbonat A Gew.-% | Bestandteile: Pfropfpolymerisat B I Gew.-% | Bestandteile: Vinylcopolymerisat C Gew.-% CI | Bestandteile: Vinylcopolymerisat C Gew.-% CII | Kerbschlagzähigkeit Izod [kJ/m²] 20° C | Kerbschlagzähigkeit Izod [kJ/m²] -40° C | Kerbschlagzähigkeit Izod [kJ/m²] -50° C | Kerbschlagzähigkeit Izod [kJ/m²] -60° C | Fließnahtfestigkeit [kJ/m²] | Oberfläche |
|---|---|---|---|---|---|---|---|---|---|---|
| 1+ | 60 | 24 | 16 | - | 54,8 | 43,7 | 25,4 | - | 6,80 | glänzend |
| 2 | 60 | 24 | 15 | 1 | 53,1 | 46,4 | 32,7 | 19,4 | 6,80 | matt |
| 3 | 60 | 24 | 14 | 2 | 54,1 | 46,2 | 37,5 | 21,3 | 7,00 | matt |
| 4 | 60 | 24 | 12 | 4 | 53,1 | 43,5 | 40,3 | 22,8 | 7,70 | matt |
| 5 | 60 | 24 | 8 | 8 | 52,4 | 41,5 | 40,4 | 23,9 | 9,10 | matt |

+ **Vergleichsbeispiel**

**Tabelle 2**

| Beispiel | Komponenten: Polycarbonat A Gew.-% | Pfropfpolymerisat B (Gew.-%) B I | Pfropfpolymerisat B (Gew.-%) B II | Vinylcopolymer C I Gew.-% | Kerbschlagzähigkeit Izod [kJ/m²] $20^0$ C | $-30^0$ C | $-40^0$ C | Fließnahtfestigkeit [kJ/m²] | Oberfläche |
|---|---|---|---|---|---|---|---|---|---|
| 1 | 60 | | 20 | 20 | 65,0 | 45,2 | 25,0 | 5,00 | matt |
| 2 (Vergleich) | 60 | 20 | | 20 | 62,0 | 44,0 | 24,0 | 4,3 | glänzend |

## Patentansprüche

**1.** Polymermischungen aus

A) 5 bis 98 Gew.-Teilen, eines aromatischen Polycarbonats,

B) 2 bis 70 Gew.-Teilen, eines Pfropfpolymerisats harzbildender Monomerer auf einen teilchenförmigen Dien- und/oder Acrylatkautschuk mit mittlerem Teilchendurchmesser ($d_{50}$) von 80 bis 800 nm, bevorzugt 100 bis 600 nm,

C) 0 bis 80 Gew.-Teilen, eines unvernetzten thermoplastischen Vinylcopolymerisats mit einer Erweichungstemperatur über 30 ° C,

in denen entweder die harzbildenden Monomeren in B) oder ein Monomer des thermoplastischen Vinylcopolymerisats C) oder beide eine solche Menge eines Monomeren der Formel (I)

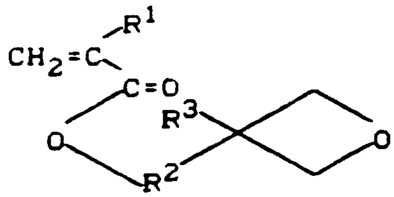

(I)

mit $R^1$ = H, $CH_3$; $R^2$ = $C_1$-$C_8$-Alkylen; $R^3$ = $C_1$-$C_4$-Alkylen enthalten haben, daß die daraus hervorgegangenen Oxetanylgruppen enthaltenden Strukturelemente 0,05 bis 5 Gew.-% der Polymermischungen ausmachen.

## Claims

**1.** Polymer mixtures of

A) 5 to 98 parts by weight of an aromatic polycarbonate,

B) 2 to 70 parts by weight of a graft polymer of resin-forming monomers on a particulate diene and/or acrylate rubber having an average particle diameter ($d_{50}$) of 80 to 800 nm and preferably 100 to 600 nm,

C) 0 to 80 parts by weight of an uncrosslinked thermoplastic vinyl copolymer having a softening temperature above 30 ° C,

in which either the resin-forming monomers in B) or a monomer of the thermoplastic vinyl copolymer C) or both have contained a monomer corresponding to formula (I)

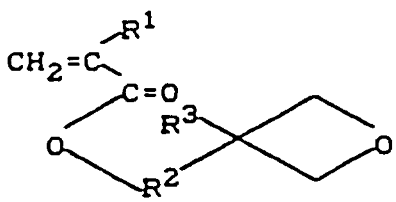

(I)

in which

$R^1$ = H, $CH_3$; $R^2$ = $C_{1-8}$ alkylene; $R^3$ = $C_{1-4}$ alkylene, in such a quantity that the structural elements containing oxetanyl groups emanating therefrom make up from 0.05 to 5% by weight of the polymer mixtures.

## Revendications

**1.** Mélanges de polymères consistant en :

A) 5 à 98 parties en poids d'un polycarbonate aromatique,

B) 2 à 70 parties en poids d'un polymère greffé de monomères formant des résines sur un caoutchouc diénique et/ou un caoutchouc d'acrylate à l'état de particules de diamètre moyen ($d_{50}$) 80 à 800 nm, de préférence 100 à 600 nm,

C) 0 à 80 parties en poids d'un copolymère vinylique thermoplastique non réticulé ayant une température de ramollissement supérieure à 30 ° C,

dans lesquels ou bien les monomères formant des résines de B), ou bien un monomère du copolymère vinylique thermoplastique C), ou les deux contenaient un monomère de formule (I) :

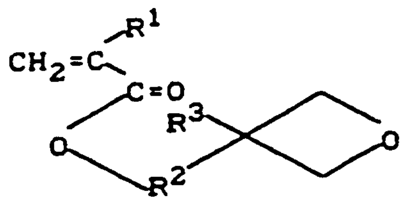

(I)

dans laquelle $R^1$ = H, $CH_3$ ; $R^2$ = alkylène en $C_1$-$C_8$ ; $R^3$ = alkylène en $C_1$-$C_4$,en quantité telle que les éléments de structure contenant des groupes oxétannyles provenant de ce monomère représentent de 0,05 à 5 % du poids des mélanges de polymères.